# EUROPEAN PATENT SPECIFICATION

(11) **EP 1 614 886 B1**
(45) Date of publication and mention of the grant of the patent: **30.09.2015**
(21) Application number: 05014553.1
(22) Date of filing: 05.07.2005
(51) Int. Cl.: F02M 35/024

(54) **Vehicle**
Fahrzeug
Véhicule

(30) Priority: 05.07.2004 JP 2004198539
(43) Date of publication of application: 11.01.2006
(73) Proprietor: Yamaha Hatsudoki Kabushiki Kaisha, Iwata-shi, Shizuoka-ken (JP)
(72) Inventor: Nishizawa, Kazuya, Iwata-shi Shizuoka-ken (JP)
(74) Representative: Grünecker Patent- und Rechtsanwälte PartG mbB

(56) References cited:
- US-A- 4 793 293
- US-B1- 6 251 151
- PATENT ABSTRACTS OF JAPAN vol. 2002, no. 10, 10 October 2002 (2002-10-10) & JP 2002 160686 A (SUZUKI MOTOR CORP), 4 June 2002 (2002-06-04)
- PATENT ABSTRACTS OF JAPAN vol. 1998, no. 09, 31 July 1998 (1998-07-31) & JP 10 095378 A (KAWASAKI HEAVY IND LTD), 14 April 1998 (1998-04-14)
- PATENT ABSTRACTS OF JAPAN vol. 2002, no. 06, 4 June 2002 (2002-06-04) & JP 2002 048021 A (HONDA MOTOR CO LTD), 15 February 2002 (2002-02-15)

## Description

The present invention relates to a vehicle, in particular a motorcycle provided with a V-type engine and an air cleaner in communication with an intake port of its engine, and a running wind introduction duct for introducing a running wind into a primary chamber of the air cleaner. JP 2002160686 discloses a motorcycle having V-type engine and has an air duct which connects an air intake to a first chamber. Said first chamber is separated by a pair of filter from 1^{st} and 2^{nd} secondary chambers. One of the 1^{st} and 2^{nd} secondary chambers is arranged in front of the primary chamber (A) while the other one is arranged behind the primary chamber. The second chambers are connected to intake ports of a V-type engine respectively.

Some motorcycles are provided with an intake system in which an outlet port of a running wind introduction duct is connected to a primary chamber of an air cleaner and an outside air introduction port of the running wind introduction duct is opened toward the front of the vehicle, with a view to utilizing the dynamic pressure of a running wind to enhance the charging efficiency of intake air.

Such an intake system is disclosed in JP-A-2003-106148. As shown therein, the intake system has a structure in which a passage extending vertically upward is connected to an air introduction device opening forward relative to a vehicle body, an air filter is positioned upstream of the passage, and a downstream side is open rearward relative to the vehicle body.

With regard to the arrangement of the running wind introduction duct described above, a passage area of the introduction duct has to be gradually narrowed so as to increase the flow velocity of air, and water such as rainwater having entered into the inside of the running wind introduction duct has to be drained to the outside. In the intake system described above, however, a passage constituting the running wind introduction duct is disposed vertically. The duct thus has its own limitation in length, and accordingly a problem arises that a length necessary for narrowing the passage as described above is hardly secured.

In order to secure the necessary length, it can be an idea that the running wind introduction duct is directed in a longitudinal direction of the vehicle. According to this idea, for models with the lateral outside of their engine covered with a cowling, problems regarding the appearance can be avoided by placing the running wind introduction duct inside the cowling. For models with their engine exposed to the lateral outside, however, problems regarding the appearance may arise depending on the arrangement of the duct.

JP 10047178 **discloses a motorcycle with a 4-cylinder engine having the cylinders arranged in a row. Therein, an air duct is connected to an air cleaner whose outlet is connected to a carburetor and further via an intake pipe to an intake port of an engine. The air cleaner comprises a small first chamber to which the air duct is connected, and a large second chamber which is connected to the carburetor.**

The present invention has an object to provide a vehicle, in particular a motorcycle capable of securing a necessary length of a running wind introduction duct.

**According to the present invention, said objective is solved by a vehicle having the combination of features of independent claim 1.**

**Accordingly, it is provided** a vehicle in particular a motorcycle, comprising an engine, an air cleaner in communication with an intake port of the engine and a running wind introduction duct for introducing a running wind into a primary chamber of the air cleaner, wherein the running wind introduction duct extends from an outside air introduction port located forward of the intake port, and extends rearward beyond the intake port to the primary chamber of the air cleaner.

Preferably, the air cleaner includes an air cleaner case and an element for defining an inside of the air cleaner case into the primary chamber and a secondary chamber, and in that the running wind introduction duct is connected to the primary chamber located below the element. Therein, the element may be shaped flatly and disposed laterally to be generally horizontal.

According to a preferred embodiment, the air cleaner case comprises upper and lower cases coupled together, said lower case having a front bottom and a rear bottom swelling downward below the front bottom, said rear bottom together with the element defining the primary chamber.

Beneficially, the element is a filter element.

Further, beneficially, the element comprises a wet-type filter paper placed and fixed in a case section formed in a shape to cover the divided surface in a rear bottom of the lower case of the air cleaner case.

According to another preferred embodiment, the primary chamber is located below the element, and the secondary chamber is disposed such that a major part of it is located forward of the element.

According to still another preferred embodiment, the running wind introduction duct is disposed such that a major part of the outside air introduction port is located on an outer side, in a vehicle width direction as viewed from a front of the vehicle, of a front fork. Therein, it is preferable if the running wind introduction duct is disposed obliquely in such a manner as to lie on an inner side, in a vehicle width direction as viewed from above the vehicle, toward a rear of the vehicle. Moreover, at least a front portion of the running wind introduction duct may be arranged in such a manner as to follow a shape of a lateral wall surface of a main frame with a rectangular cross section.

According to yet another preferred embodiment, the running wind introduction duct covers at least a part of a joint member connecting the secondary chamber of the air cleaner and the intake port on an outer side in a vehicle width direction.

In the following, the present invention is explained in greater detail with respect to several embodiments thereof in conjunction with the accompanying drawings, wherein:
- FIG. 1: is a side view of a front body frame where an intake system according to an embodiment is provided;
- FIG. 2: is a partially sectional side view of an air cleaner of the intake system;
- FIG. 3: is a plan view of the intake system; and
- FIG. 4: is a sectional side view of a running wind introduction duct of the intake system.

An embodiment will be described hereinafter with reference to the accompanying drawings.

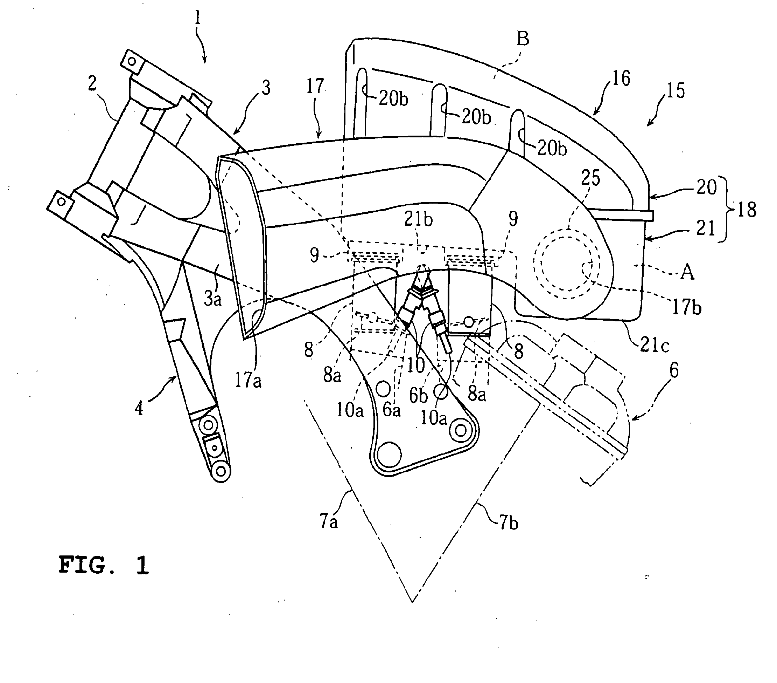

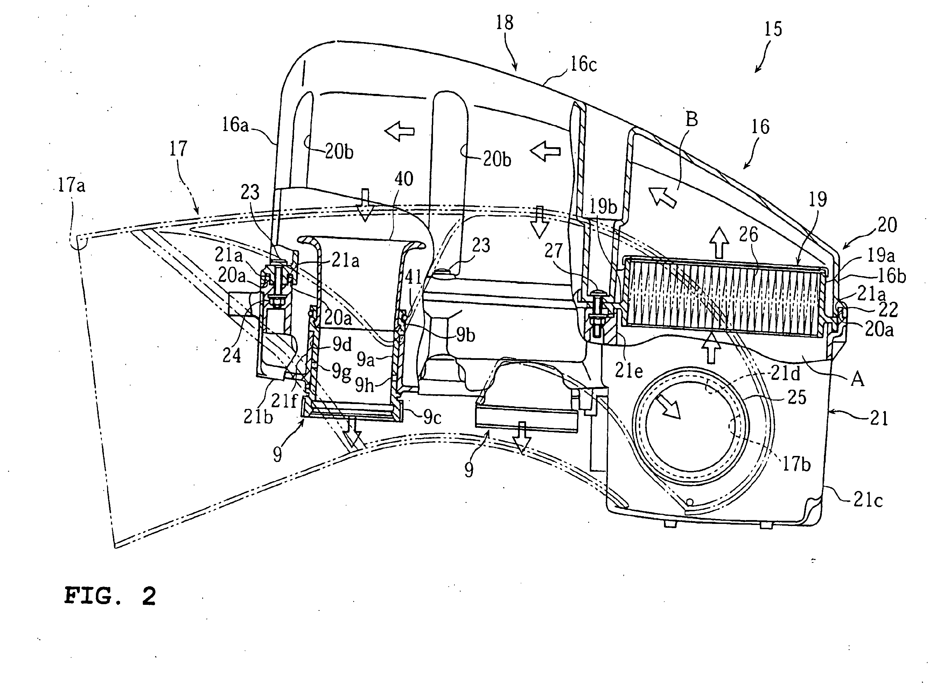

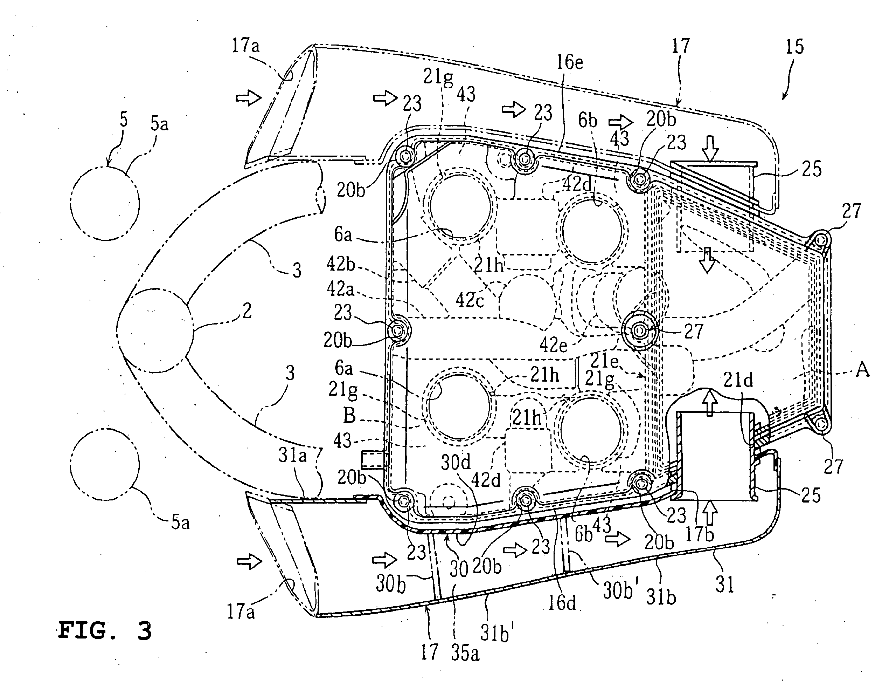

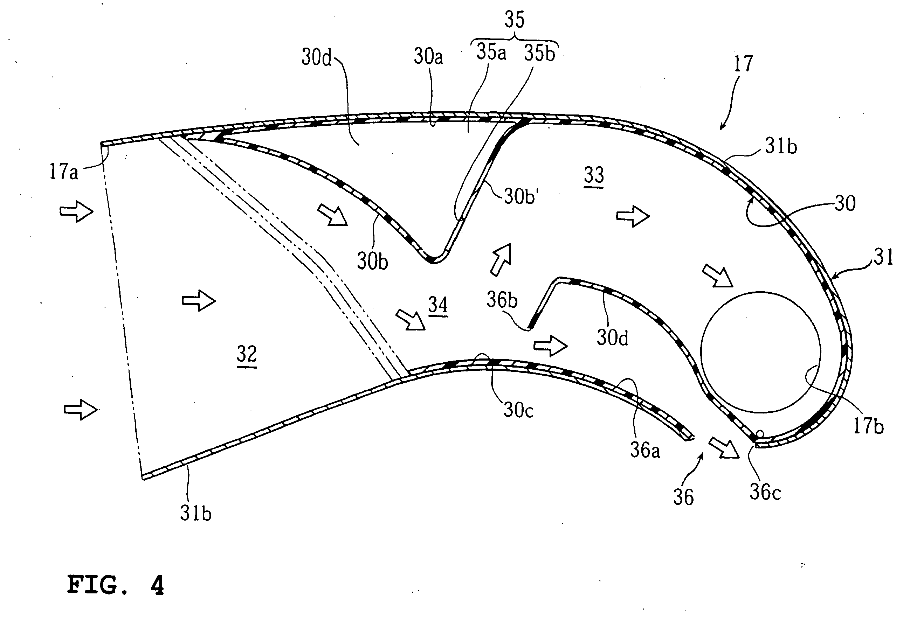

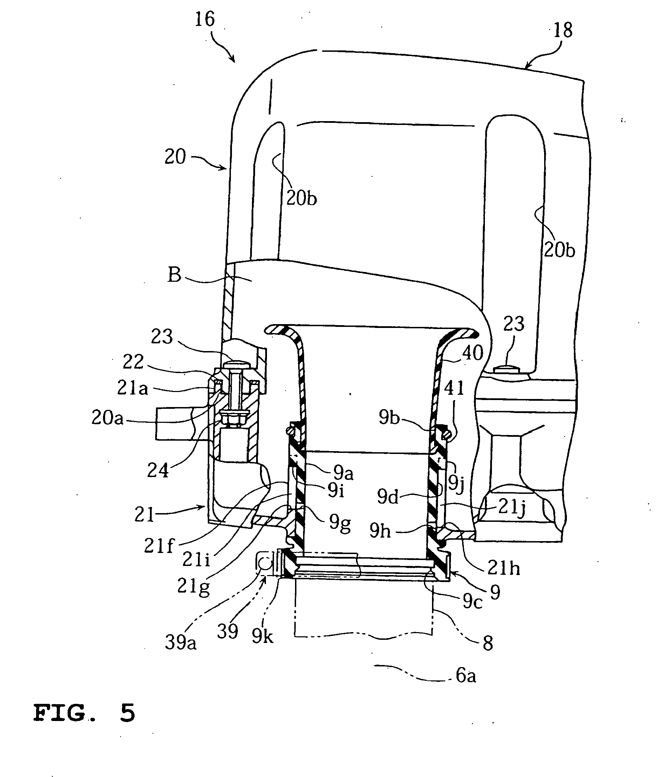

FIGs. 1 through 5 illustrate an intake system of an engine according to an embodiment, in which: FIG. 1 is a side view of a front body frame where the intake system is provided; FIG. 2 is a partially sectional side view of an air cleaner of the intake system; FIG. 3 is a plan view of the intake system; FIG. 4 is a sectional side view of a running wind introduction duct of the intake system; and FIG. 5 is a sectional side view of a joint member for the air cleaner. Incidentally, the terms "front", "rear", "left" and "right" as used herein are meant as seen from the rider seated on the seat.

In the drawings, reference numeral 1 designates a front body frame of a motorcycle. The front body frame 1 includes a head pipe 2 located at the front end of the vehicle body, a pair of left and right main frames 3 which spread outward in a vehicle width direction while extending obliquely downward from the head pipe 2, and a pair of left and right under frames 4 extending obliquely downward from the front end of the lower surface of the main frames 3 such that a spacing from the main frames 3 becomes larger rearward.

The left and right main frames 3 are of a rectangular tube, and have the shape of a vertically longer rectangle, i.e. its height is larger than its width, as viewed in cross section.

A front fork 5 is pivotally supported by the head pipe 2 so as to rotate left and right for steering. The front fork 5 is made up of left and right fork bodies 5a, 5a coupled by upper and lower brackets. A steering shaft provided between the upper and lower brackets is pivotally supported by the head pipe 2. A front wheel and steering handlebars (not shown) are provided at a lower end and an upper end, respectively, of and between the left and right fork bodies 5a, 5a.

An engine 6 is supported in suspension between the left and right main frames 3 and under frames 4, and a rear body frame (not shown) of the vehicle. The engine 6 is mounted such that its cylinder block, cylinder head, head cover, etc. are exposed to the outside among the main frame 3, the under frame 4 and the rear body frame.

The engine 6 is a V-type 4-cylinder engine with respective axes 7a, 7b of its front and rear cylinders forming a V-bank. Within the V-bank, left and right front intake ports 6a, 6a, in communication with the front cylinders, and left and right intake ports 6b, 6b, in communication with the rear cylinders, are open upward.

Front and rear throttle bodies 8, 8, disposed with their axes directed generally vertically, are connected to upstream-end openings of the front and rear intake ports 6a, 6b, respectively. The throttle bodies 8 are each provided with a throttle valve 8a for varying its passage area.

The front and rear throttle bodies 8 are each provided with fuel injection valves 10 for the respective cylinders. The fuel injection valves 10 are disposed such that their injection port 10a is oriented toward the backside of an intake valve for opening and closing an opening to a combustion chamber at a lower end of the intake ports 6a, 6b.

The engine 6 includes an intake system 15. The intake system 15 includes an air cleaner 16 in communication with the intake ports 6a, 6b, and a pair of left and right running wind introduction duct 17, 17 for introducing a running wind into the air cleaner 16.

The air cleaner 16 is disposed over the V-bank of the engine 6 in such a manner as to cover upstream-end openings of the front and rear throttle bodies 8, 8. The air cleaner 16 has an appearance similar to that of a fuel tank. As viewed from a lateral side of the vehicle, a top wall 16c of the air cleaner 16 is gently inclined obliquely downward from a front wall 16a side to a rear wall 16b side, as shown in FIG. 2. Also, as seen from above the vehicle, left and right side walls 16d, 16e of the air cleaner 16 are arranged to be spaced narrower in a vehicle width direction toward the rear, as shown in FIG. 3. The air cleaner 16 in its entirety is generally shaped in a trapezoid.

The left and right running wind introduction ducts 17 extend in longitudinal directions of the vehicle along the left and right side walls 16d, 16e of the air cleaner 16. The left and right running wind introduction ducts 17 are of the same symmetrical structure, and thus the left running wind introduction duct 17 will be mainly described.

An outside air introduction port 17a of the running wind introduction duct 17 is located forward of the front intake port 6, and open forward and slightly downward and outward. The running wind introduction duct 17 extends from the outside air introduction port 17a to a primary chamber A of the air cleaner 16, which is located rearward of the front and rear intake ports 6a, 6b. An outside air outlet port 17b formed at the rear end of the running wind introduction duct 17 is connected in communication with the primary chamber A of the air cleaner 16.

A front portion of the running wind introduction duct 17 is arranged in such a manner as to follow the shape of an outside wall surface 3a of the main frame 3 of a vertically longer rectangle. That is, the outside air introduction port 17a is arranged such that the outside wall surface 3a is continued to a front inside wall surface 31a of the running wind introduction duct 17. This allows the outside wall surface 3a to function as a guide to introduce a running wind into the outside air introduction port 17a.

Also, the running wind introduction duct 17 is arranged such that the outside air introduction port 17a is located on an outer side of the fork body 5a of the front fork 5. This allows the outside air introduction port 17a to be open without being blocked by the fork body 5a as viewed from the front of the vehicle. The running wind introduction duct 17 is disposed in such a manner as to cover front and rear joint members 9, 9 for the air cleaner 16 from an outer side in a vehicle width direction, as viewed from a lateral side of the vehicle.

As viewed from above the vehicle, the running wind introduction duct 17 is disposed obliquely in such a manner as to lie on an inner side in a vehicle width direction toward the rear of the vehicle. Also, as viewed from a lateral side of the vehicle, an upper edge of the running wind introduction duct 17 extends generally linearly rearward from the outside air introduction port 17a and then curves greatly obliquely downward toward the outside air outlet port 17b, while its lower edge curves gently upward in a convex shape all the way from the outside air introduction port 17a to the outside air outlet port 17b.

The air cleaner 16 includes an air cleaner case 18 and an element 19 for defining the inside of the air cleaner case 18 into the primary chamber A and a secondary chamber B.

The air cleaner case 18 is divided into an upper case 20 and a lower case 21. The outer periphery of the divided surface of the upper case 20 is formed with a concave groove 20a extending peripherally, and the outer periphery of the divided surface of the lower case 21 is formed with a convex portion 21 a in engagement with the concave groove 20a through a seal ring 22.

The upper case 20 and the lower case 21 are coupled to each other in a detachable but airtight manner by fastening plural bolts 23, inserted at predetermined intervals through the outer peripheral edge of the upper case 20, into nuts 24 placed by insert molding in the mating surface of the lower case 21. A clearance recess 20b opening upward is formed in respective portions of the upper case 20 facing the bolts 23.

The lower case 21 has a front bottom 21b and a rear bottom 21c swelling downward below the front bottom 21 b. The front bottom 21 b and the rear bottom 21 c are defined by a dividing wall 21 e.

A running wind inlet port 21d is formed on left and right sides of the rear bottom 21c. The outside air outlet port 17b of the running wind introduction duct 17 is connected in communication with the running wind inlet port 21d through a cylindrical communication member 25 in an airtight manner.

The element 19 has a structure as follows: A wet-type filter paper 26 is placed and fixed in a case section 19a formed in the shape of such a square tube as to cover the divided surface in the rear bottom 21 c of the lower case 21. A flange section 19b is formed along the outside periphery of the case section 19a and integrally therewith.

The flange section 19b is interposed between the divided surfaces of the upper case 20 and the lower case 21. The flange section 19b is fixed to the lower case 21, together with the upper case 20, with its front center and rear left and right ends detachably fastened by three bolts 27.

The element 19 is disposed laterally over an upper opening of the rear bottom 21c of the lower case 21 such that the filter paper 26 is generally horizontal. The element 19 blocks the upper opening of the rear bottom 21 c.

The primary chamber A is formed in a space surrounded by the element 19 and the rear bottom 21 c below it. Also, the secondary chamber B is formed in a space surrounded by the element 19, the upper case 20 above it, and the front bottom 21 b. A most part of the secondary chamber B is displaced greatly forward of the element 19, compared to the primary chamber A.

The capacity of the secondary chamber B is about 4-5 times that of the primary chamber A. Specifically, for an engine of large displacement over 1000 cc, for example, the capacities of the primary chamber A and the secondary chamber B are respectively set at about 2.3 liters and about 10 liters.

The running wind introduction duct 17 is constituted with a base member 30 made of resin and located on an inner side in a vehicle width direction, and a cover member 31 made of an aluminum alloy and secured to the base member 30 in such a manner as to cover it from an outer side in a vehicle width direction. The surface of the cover member 31 is applied with a gloss finish, for example, for improving the appearance.

The base member 30, formed with the outside air outlet port 17b, is generally formed in the shape of a square U in cross section. The cover member 31 is made up of a front cylindrical portion 31 a formed with the outside air introduction port 17a, and a body portion 31 b generally formed in such a semi-elliptical shape in cross section as to surround the base member 30 from an outer side. The cover member 31 covers the base member 30 such that it cannot be seen from an outer side.

The running wind introduction duct 17 includes a narrowing section 34 for increasing the flow velocity of intake air, a resonator 35 for absorbing intake noise of predetermined frequencies due to the intake air, and a drain section 36 for draining out rainwater having entered into the duct. The structure of these components will be described below.

As shown mainly in FIG. 4, the running wind introduction duct 17 includes a front part 32 having the outside air introduction port 17a, and a rear part 33 with a passage area smaller than that of the front part 32. The narrowing section 34 for narrowing the passage area is formed in a border area between the front part 32 and the rear part 33.

The narrowing section 34 is formed by providing in the base member 30 on its top wall 30a side a narrowing wall 30b swelling therefrom toward a bottom wall 30c side. That is, the narrowing section 34a is formed in a space between a lower end of the narrowing wall 30b and the bottom wall 30c. The narrowing wall 30b reduces the passage area in the front part 32 gradually from the outside air introduction port 17a to the narrowing section 34.

The resonator 35 is constructed as follows: A resonance space 35a with a predetermined capacity is formed by the top wall 30a and the narrowing wall 30b. The resonance space 35a is in communication with the inside of the duct through a communication port 35b formed in the narrowing wall 30b on the rear part 33 side.

A partition wall 30d is formed integrally with the rear part 33 of the base member 30. The partition wall 30d extends generally in parallel with a rear portion 30b' of the narrowing wall 30b, and then bends downward to extend generally in parallel with the top wall 30a. The partition wall 30d allows the passage area in the rear part 34 to the outside air outlet port 17b to be approximately equal to that at the narrowing section 34.

The partition wall 30d and the bottom wall 30c form a branch passage 36a constituting the drain section 36. An upstream port 36b of the branch passage 36a is opened toward the narrowing section 34 in the front part 32, and a downstream port 36c thereof is opened toward the cylinder head of the rear cylinders 7b of the engine 6.

The narrowing section 34, the resonance space 35a, and the branch passage 36a are formed by covering the base member 30 with the cover member 31.

The front bottom 21b of the lower case 21 forming the bottom of the secondary chamber B of the air cleaner 16 is formed integrally with cylindrical bosses 21f corresponding to the front and rear intake ports 6a, 6b and extending in a vertical direction. The secondary chamber B of the air cleaner 16 is connected in communication with the throttle bodies (engine side members) 8 through the joint members 9 respectively mounted and fitted in the bosses 21 f.

The joint member 9 is made of elastically deformable rubber, and constituted of a cylindrical body 9a having an upper-end opening 9b and a lower-end opening 9c, and a fitting recess 9d with a diameter smaller than that of the body 9a and formed in an outside circumference thereof.

The joint member 9 is inserted as elastically deformed into the boss 21f, and then the fitting recess 9d is fitted with the boss 21f. This allows the joint member 9 to be positioned immovably in a vertical direction and abut against the inside circumferential surface of the boss 21f in an airtight manner.

An intake pipe 40 opening vertically upward is inserted and fitted into the upper-end opening 9b. The intake pipe 40 is fastened and fixed by a spring band 41 mounted on the upper-end opening 9b. Also, the throttle body 8 is inserted and fitted into the lower-end opening 9c. The throttle body 8 is fastened and fixed by a fixing band 39 mounted on the lower-end opening 9c.

As shown in FIG. 3, the front bottom 21b of the lower case 21 is formed with various interference avoidance sections 42a-42e swelling upward to avoid interference with in-vehicle components. The interference avoidance sections 42a-42e are formed in regions around the bosses 21f, and include, for example, a harness installation portion 42a extending in a longitudinal direction in center in a vehicle width direction, a water pipe clearance portion 42b intersecting the harness installation portion 42a, an idle air adjusting step motor clearance portion 42c formed at an intersection of the portions 42a, 42b, a pressure regulator clearance portion 42d formed between the front and rear bosses 21f, a throttle motor clearance portion 42e formed between the rear right intake port 6b and the harness installation portion 42a.

The front bottom 21 b of the lower case 21 is also formed with plural swelling sections 43 swelling relatively downward with respect to the interference avoidance sections 42a-42e. The swelling sections 43 are formed in regions where the interference avoidance sections 42a-42e are not formed, in such a manner as to contact the bosses 21f.

As mainly shown in FIG. 5, the boss 21f and the joint member 9 are formed with pairs of drain holes 9g, 21g and 9h, 21h, respectively, passing through in opposing radial directions around a central axis of the boss 21f. The secondary chamber B of the air cleaner 16 and the intake ports 6a, 6b of the engine 6 are in communication with each other through the drain holes 9g, 21 g and 9h, 21 h.

The drain holes 9g, 21 g on one side are located on an outer side, in a vehicle width direction, with respect to the boss 21f, and the drain holes 9h, 21h on the other side are located on an inner side in a vehicle width direction. The inner drain holes 9h, 21 h are disposed with steps so as to be disposed to be lower than the outer drain holes 9g, 21 g. The drain holes 9g, 21 g and 9h, 21 h are located in such a manner as to correspond to the swelling sections 43 swelling relatively downward.

The boss 21f is formed with slits 21 i, 21j extending in continuation to the drain holes 21 g, 21h to an upper end thereof. On the other hand, an upper-end portion of the fitting recess 9d surface of the joint member 9 is formed with positioning projections 9i, 9j for engagement with the slits 21i, 21j. This allows the joint member 9 to be positioned at a predetermined angle immovably in circumferential directions.

When the positioning projections 9i, 9j of the joint member 9 are in engagement with the slits 21i, 21j of the boss 21f, the drain holes 21g, 21h of the boss 21f correspond to the drain holes 9g, 9h of the joint member 9, respectively.

A band positioning section 9k for positioning the fixing band 39 at a predetermined circumferential angle is formed to project at the lower-end opening 9c of the joint member 9. When the positioning projections 9i, 9j of the joint member 9 are in engagement with the slits 21i, 21j of the boss 21f, a fastening bolt 39a of the fixing band 39 is directed to a prescribed direction for fastening. That is, the band positioning section 9k allows the fixing band 39 to be directed in a direction where a fastening jig can be inserted when assembling the air cleaner 16 to the engine 6.

The functions and effects of this embodiment will be described next.

According to the intake system of this embodiment, the left and right running wind introduction ducts 17 extend from the outside air introduction port 17a located forward of the front intake port 6a, passing by the front and rear intake ports 6a, 6b, to the primary chamber A of the air cleaner 16 located rearward thereof. This secures the length of the duct long enough for the installation of the narrowing section 34 for increasing the flow velocity of intake air, the drain section 36 for draining out rainwater or the like, and the resonator 35 for reducing intake noise.

In addition, the running wind introduction duct 17 can be utilized as a design part for improving the appearance around the engine. This can avoid a poor appearance even for so-called naked models with the engine 6 exposed to the lateral outside. That is, the running wind introduction duct 17 extends in a longitudinal direction from the outside air introduction port 17a located forward of the front and rear intake ports 6a, 6b, and extends rearward beyond them. The running wind introduction duct 17 is thus designed in a sense to visually express the flow of a running wind, so as to avoid a poor appearance with the running wind introduction duct 17 exposed to the outside.

In this embodiment, the element 19 is disposed laterally, or generally horizontally, in the air cleaner case 18 to define the inside thereof into the primary chamber A and the secondary chamber B, and the outside air outlet port 17b of the running wind introduction duct 17 is connected to the primary chamber A located below the element 19. Thus, air having been introduced into the running wind introduction duct 17 flows from below the element 19 to above it. This makes it difficult for foreign matters such as paper having entered into the primary chamber A to be drawn toward the lower surface of the element 19. They will easily fall down freely even if they are drawn, preventing clogging in the element 19. In cases where air flows from above the element to below it as in the above-described conventional patent document, for example, foreign matters may remain on the element to cause clogging thereof. In cases where air flows laterally through the element, clogging may be easily caused as well.

In this embodiment, the primary chamber A is located below the element 19 and the secondary chamber B is displaced greatly forward of the element 19. This can secure a necessary capacity of the secondary chamber B and minimize the height of the air cleaner 16, reducing the constraints on the design of the air cleaner 16. In other words, in cases where the secondary chamber B is located above the primary chamber A, the height of the entire air cleaner is accordingly increased. This may cause constraints on the capacity and design of the secondary chamber.

In this embodiment, the outside air introduction ports 17a of the left and right running wind introduction ducts 17 are located on outer sides, in a vehicle width direction, of the left and right fork bodies 5a. This can prevent the front fork 5 from acting as resistance to a running wind to be introduced, enhancing the air intake efficiency.

In this embodiment, the running wind introduction duct 17 is disposed obliquely in such a manner as to lie on an inner side in a vehicle width direction toward the rear of the vehicle. Thus, the running wind introduction duct 17 is connected to, and in communication with, the primary chamber A of the air cleaner 16 at a gentle angle, which reduces the passage resistance to an intake air flow for smooth air flow.

In this embodiment, the front portion of the running wind introduction duct 17 is arranged in such a manner as to follow the shape of the outside wall surface 3a of the main frame 3. Thus, the outside wall surface 3a functions as a guide to introduce a running wind into the running wind introduction duct 17. In this way, the outside wall surface 3a of the main frame 3 can be utilized effectively to enhance the intake efficiency.

In this embodiment, the left and right running wind introduction ducts 17 cover from lateral sides the joint members 9 communicatively connecting the air cleaner 16 and the respective intake ports 6a, 6b, so as to prevent the joint members 9 from being seen and prevent a poor appearance.

According to the intake system of this embodiment, the running wind introduction duct 17 includes the resonator 35 having the communication port 35b in communication with the inside of the duct. This can prevent a poor appearance and an increased installation space, compared to conventional resonators attached externally.

In this embodiment, the narrowing section 34 is formed in a border area between the front part 32 and the rear part 33 of the running wind introduction duct 17, and the resonance space 35a of the resonator 35 is formed by effectively utilizing the narrowing wall 30b constituting the narrowing section 34. Thus, the resonator 35 can be provided by effectively utilizing a dead space formed in the running wind introduction duct 17 by the narrowing section 34. This can reduce intake noise while achieving satisfactory appearance and functions of the running wind introduction duct 17.

In this embodiment, the narrowing section 34 is formed on the top wall 30a side of the base member 30 of the running wind introduction duct 17, and the branch passage 36a toward the cylinder head is formed on the bottom wall 30c side of the rear part 33. Thus, rainwater is drained out through the branch passage 36a together with a part of a running wind passing through a passage narrowed by the narrowing section 34 on a lower side of the passage. This can reliably drain out rainwater. The part of the running wind emitted through the branch passage 36a cools the cylinder head, improving the cooling performance. Further, the emitted running wind can prevent a temperature around the rider from being raised by heat from the engine.

In addition, rainwater or the like having entered into the running wind introduction duct 17 hits the narrowing wall 30b of the narrowing section 34 located on an upper side of the passage, drops down onto the bottom wall 30c, and is drained to the outside through the branch passage 36a. In this manner, rainwater can be drained out efficiently and reliably.

In this embodiment, the running wind introduction duct 17 is constituted with the base member 30 located on an inner side and the cover member 31 located on an outer side. Thus, the running wind introduction duct 17 can be fabricated simply by making the members separately and then assembling them together. Another advantage is that the degree of freedom in terms of shape can be enhanced.

In this embodiment, the base member 30 is made of resin and the cover member 31 is made of an aluminum alloy. Thus, the narrowing section 34, the resonator 35, and the branch passage 36a can be formed easily by forming the narrowing wall 30b and the partition wall 30d integrally with the base member 30, and covering it with the cover member 31.

In addition, the cover member 31 is applied with a surface treatment for improving the appearance of the entire running wind introduction duct 17, even for models with the engine 6 exposed to the lateral outside.

According to the intake system of this embodiment, the front bottom 21 b of the secondary chamber B of the air cleaner 16 is formed with the cylindrical bosses 21f extending in a vertical direction, the joint member 9 is mounted and fitted in the boss 21f, and the joint member 9 and the boss 21f are formed with the pairs of drain holes 9g, 21 g and 9h, 21 h, respectively, passing through in radial directions. Thus, drainage accumulated at the front bottom 21b is sucked directly into the intake ports 6a, 6b through the drain holes 9g, 21g and 9h, 21 h. This allows efficient drainage disposal with a simple structure, compared to conventional approaches using a communication pipe.

In this embodiment, the front bottom 21b of the air cleaner 16 is formed with the interference avoidance sections 42a-42e to avoid interference with in-vehicle components. Thus, it is possible to lower the front bottom 21b while avoiding interference with various in-vehicle components, and increase the capacity of the clean (secondary) side of the air cleaner 16 without increasing the height thereof.

In addition, the front bottom 21b is also formed with the swelling sections 43 swelling relatively downward with respect to the interference avoidance sections 42a-42e, and the drain holes 9g, 21g and 9h, 21h are located in positions corresponding to the swelling sections 43. Thus, drainage accumulated at the front bottom 21b can be easily collected at the swelling sections 43 for further efficient drainage disposal.

In this embodiment, the boss 21f is formed with the slits 21 i, 21j extending in continuation to the drain holes 21g, 21h to an upper end thereof, the joint member 9 is formed with the positioning projections 9i, 9j for engagement with the slits 21i, 21j, and when the positioning projections 9i, 9j are in engagement with the slits 21i, 21j, the drain holes 21g, 21h of the boss 21f correspond to the drain holes 9g, 9h of the joint member 9, respectively. Thus, simply inserting and fitting the joint member 9 into the boss 21f allows the drain holes 9g, 21g and 9h, 21h of the two members to be positioned with respect to each other, so as to facilitate their assembly work.

In this embodiment, when the positioning projections 9i, 9j of the joint member 9 are in engagement with the slits 21i, 21j, the fastening bolt 39a of the fixing band 39 is directed to a prescribed direction for fastening. Thus, simply inserting and fixing the joint member 9 into the boss 21f can make the fastening work of the fixing band 39 easy.

The description above discloses (amongst others), according to a first aspect, an embodiment of a motorcycle including: an air cleaner in communication with an intake port of its engine; and a running wind introduction duct for introducing a running wind into a primary chamber of the air cleaner, in which the running wind introduction duct extends from an outside air introduction port located forward of the intake port, and extends rearward beyond the intake port to the primary chamber of the air cleaner.

According to the motorcycle of the first aspect, a running wind introduction duct extends from an outside air introduction port located forward of an intake port, and extends rearward beyond the intake port to a primary chamber of an air cleaner. Thus, it is possible to secure a sufficient length of the duct necessary to narrow the passage as described above, and to drain out water such as rainwater.

In addition, the running wind introduction duct extends in a longitudinal direction from the outside air introduction port located forward of the intake port, and extends rearward beyond it. Thus, the running wind introduction duct can be designed to visually express air flow, for example, and can be utilized as a design part for improving the appearance around the engine. As a result, the intake system of the present invention can avoid a poor appearance even for models with the engine exposed to the lateral outside.

According to a second aspect, there is provided an embodiment of a motorcycle in which the air cleaner includes an air cleaner case and an element for defining an inside of the air cleaner case into the primary chamber and a secondary chamber, and the running wind introduction duct is connected to the primary chamber located below the element.

According to the second aspect, the inside of an air cleaner case is defined by an element into the primary chamber and a second chamber, and the running wind introduction duct is connected to the primary chamber located below the element. Thus, air having been introduced into the running wind introduction duct flows from below the element to above it. In cases where air flows from above the element to below it as in the above-described conventional patent document, for example, foreign matters having entered into the primary chamber may remain on the element to cause clogging thereof. The present invention makes it difficult for foreign matters having entered into the primary chamber to be drawn toward the lower surface of the element, because their own weight acts in a direction to move them away from the element. In addition, even if they are drawn, they will easily fall down freely under a low intake condition such as an idle condition, preventing clogging in the element.

According to a third aspect, there is provided an embodiment of a motorcycle in which the element is shaped flatly and disposed laterally to be generally horizontal.

According to the motorcycle of the third aspect, the element is shaped flatly and disposed laterally to be generally horizontal. Thus, the height of the air cleaner can be reduced, which can contribute to easily securing an installation space for the air cleaner, for example over the engine.

According to a fourth aspect, there is provided an embodiment of a motorcycle in which the primary chamber is located below the element, and the secondary chamber is disposed such that a major part of it is located forward of the element.

According to the motorcycle of the fourth aspect, the primary chamber is located below the element, and a major part of the secondary chamber is located forward of the element. In cases where the secondary chamber is located above the primary chamber, for example, the height of the entire air cleaner increases accordingly, which may cause constraints on the capacity and design of the secondary chamber. In the present invention, the secondary chamber is located forward. This can secure a necessary capacity of the secondary chamber without increasing the height of the air cleaner or causing constraints on the design of the air cleaner.

According to a fifth aspect, there is provided an embodiment of a motorcycle in which the running wind introduction duct is disposed such that a major part of the outside air introduction port is located on an outer side, in a vehicle width direction as viewed from a front of the vehicle, of a front fork.

According to the motorcycle of the fifth aspect, the outside air introduction port of the running wind introduction duct is located on an outer side of a front fork. This can prevent the front fork from acting as resistance to a running wind to be introduced, enhancing the air intake efficiency.

According to a sixth aspect, there is provided an embodiment of a motorcycle in which the running wind introduction duct is disposed obliquely in such a manner as to lie on an inner side, in a vehicle width direction as viewed from above the vehicle, toward a rear of the vehicle.

According to the motorcycle of the sixth aspect, the running wind introduction duct is disposed obliquely in such a manner as to lie on an inner side in a vehicle width direction toward the rear of the vehicle. Thus, the running wind introduction duct is connected to, and in communication with, the air cleaner at a gentle angle, which accordingly reduces the passage resistance for smooth air flow.

According to a seventh aspect, there is provided an embodiment of an engine in which at least a front portion of the running wind introduction duct is arranged in such a manner as to follow a shape of a lateral wall surface of a main frame with a rectangular cross section.

According to the engine of the seventh aspect, at least a front portion of the running wind introduction duct is arranged in such a manner as to follow the shape of a lateral wall surface of a main frame. Thus, a running wind can be easily guided by the lateral wall surface into the running wind introduction duct. In this way, the lateral wall surface of the main frame can be utilized effectively to enhance the intake efficiency.

According to an eight aspect, there is provided an embodiment of an engine in which the running wind introduction duct covers at least a part of a joint member connecting the secondary chamber of the air cleaner and the intake port from an outer side in a vehicle width direction.

According to the engine of the eight aspect, the running wind introduction duct covers at least a part of a joint member connecting the air cleaner and the intake port. Thus, it is possible to prevent the joint member from being exposed to the outside and prevent a poor appearance.

Amongst the embodiments described above, it is preferred to provide a motorcycle capable of securing a necessary length of a running wind introduction duct without spoiling its appearance, said motorcycle including an air cleaner 16 in communication with intake ports 6a, 6b of its engine 6, and a running wind introduction duct 17 for introducing a running wind into a primary chamber A of the air cleaner 16, the running wind introduction duct 17 extending from an outside air introduction port 17a located forward of the intake port 6a, and passing by the front and rear intake ports 6a, 6b, to the primary chamber A of the air cleaner 16.

## Claims

1. Vehicle, in particular a motorcycle, comprising:
a V-type engine (6) having front and rear intake ports (6a,6b);
an air cleaner (16) in communication with the intake ports (6a,6b) of the engine (6); and a running wind introduction duct (17) for introducing an air stream into a primary chamber (A) of the air cleaner (16), wherein the running wind introduction duct (17) extends from an outside air introduction port (17a) located forward of the front intake port (6a) and extends to an outside air outlet port (17b) formed at a rear end of the running wind introduction duct (17) connected in communication with the primary chamber (A) of the air cleaner (16),
the air cleaner (16) includes an air cleaner case (18) and an element (19) for defining an inside of the air cleaner case (18) into the primary chamber (A) and a secondary chamber (B), and in that the running wind introduction duct (17) is connected to the primary chamber (A) located below the element (19) and the secondary chamber (B) is disposed such that a major part of it is located forward of the element (19), **characterised in that** the running wind introduction duct (17) extends from the outside air introduction port (17a) rearward beyond the front and rear intake ports (6a, 6b) to the primary chamber (A) of the air cleaner (16), which is located rearward of the front and rear intake ports (6a, 6b).

2. Vehicle according to claim 1, wherein the element (19) is shaped flatly and disposed laterally to be generally horizontal.

3. Vehicle according to claim 1 or 2, wherein the air cleaner case (18) comprises upper and lower cases (20,21) coupled together, said lower case (21) having a front bottom (21 b) and a rear bottom (21 c) swelling downward below the front bottom (21 b), said rear bottom (21c) together with the element (19) defining the primary chamber (A).

4. Vehicle according to claim 1 to 3, wherein element (19) is a filter element.

5. Vehicle according to one of the claims 1 to 4, wherein element (19) comprises a wet-type filter paper (26) placed and fixed in a case section (19a) formed in a shape to cover the divided surface in a rear bottom (21 a) of the lower case (21) of the air cleaner case (18).

6. Vehicle according to one of claims 1 to 5, wherein the running wind introduction duct (17) is disposed such that a major part of the outside air introduction port (17a) is located on an outer side, in a vehicle width direction as viewed from a front of the vehicle, of a front fork (5).

7. Vehicle according to claim 6, wherein the running wind introduction duct (17) is disposed obliquely in such a manner as to lie on an inner side, in a vehicle width direction as viewed from above the vehicle, toward a rear of the vehicle.

8. Vehicle according to claim 6 or 7, wherein at least a front portion (32) of the running wind introduction duct (17) is arranged in such a manner as to follow a shape of a lateral wall surface (3a) of a main frame (3) with a rectangular cross section.

9. Vehicle according to one of the claims 1 to 8, wherein the running wind introduction duct (17) covers at least a part of a joint member (9) connecting the secondary chamber (B) of the air cleaner (16) and the intake port (6a) on an outer side in a vehicle width direction.

## Patentansprüche

1. Fahrzeug, insbesondere ein Motorrad, mit:
einem V-Typ Motor (6), der vordere und hintere Einlass-Anschlüsse (6a, 6b) hat;
einem Luftfilter (16), in Verbindung mit den Einlass-Anschlüssen (6a, 6b) des Motors (6); und
einem Fahrt-Wind-Einlasskanal (17), zum Einführen eines Luftstroms in eine Primär-Kammer (A) des Luftfilters (16), wobei der Fahrt-Wind-Einlasskanal (17) sich von einem Außenluft-Einlass-Anschluss (17a), angeordnet vor dem vorderen Einlass-Anschluss (6a) erstreckt und sich zu einem Außenluft-Auslass-Anschluss (17b),
ausgebildet an einem hinteren Ende des Fahrt-Wind-Einlasskanals (17), erstreckt,
verbunden in Kommunikation mit der Primär-Kammer (A) des Luftfilters (16),
der Luftfilter (16) beinhaltet ein Luftfilter-Gehäuse (18) und ein Element (19) zum Definieren eines Innenraum des Luftfilter-Gehäuses (16) in die Primär-Kammer (A) und eine Sekundär-Kammer (B), und dass der Fahrt-Wind-Einlasskanal (17) mit der Primär-Kammer (A), angeordnet unterhalb des Elements (19), verbunden ist, und die Sekundär-Kammer (B) so positioniert ist dass ein Hauptteil derselben vor dem Element (19) angeordnet ist, **dadurch gekennzeichnet, dass** der Fahrt-Wind-Einlasskanal (17) sich von dem Außenluft-Einlass-Anschluss (17a) sich nach hinten,
hinter die vorderen und hinteren Einlass-Anschlüssen (6a, 6b) zu der Primär-Kammer (A) des Luftfilters (16) erstreckt, die rückwärtig von den vorderen und hinteren Einlass-Anschlüssen (6a, 6b) angeordnet ist.

2. Fahrzeug gemäß Anspruch 1, wobei das Element (19) flach ausgeformt ist und quer positioniert ist, um grundsätzlich horizontal zu sein.

3. Fahrzeug gemäß Anspruch 1 oder 2, wobei das Luftfilter-Gehäuse (18) obere und untere Gehäuse (20, 21) aufweist, die zusammengekoppelt sind, dieses untere Gehäuse (21) hat einen vorderen Boden (21 b) und einen hinteren Boden (21 c), der nach unten unterhalb des vorderen Bodens (21 b) hervortritt, dieser hintere Boden (21c) definiert zusammen mit dem Element (19) die Primär-Kammer (A).

4. Fahrzeug gemäß Anspruch 1 bis 3, wobei das Element (19) ein Filter-Element ist.

5. Fahrzeug gemäß einem der Ansprüche 1 bis 4, wobei das Element (19) ein Nass-Typ-Filterpapier (26) umfasst, platziert und fixiert in einem Gehäuseabschnitt (19a), ausgebildet in einer Form um die geteilte Fläche in einen hinteren Boden (21 a) des unteren Gehäuses (21) des Luftfilter-Gehäuses (18) abzudecken.

6. Fahrzeug gemäß einem der Ansprüche 1 bis 5, wobei der Fahrt-Wind-Einlasskanal (17) positioniert ist, so dass ein Hauptteil des Außenluft-Einlass-Anschlusses (17a) an einer äußeren Seite in einer Fahrzeug-Breiten-Richtung angeordnet ist, wenn betrachtet von einer Vorderseite des Fahrzeugs, von einer Vordergabel (5).

7. Fahrzeug gemäß Anspruch 6, wobei der Fahrt-Wind-Einlasskanal (17) schräg positioniert ist in so einer Weise, dass dieser an einer Innenseite in einer Fahrzeug-Breiten-Richtung liegt, betrachtet von oben von dem Fahrzeug, zu einem hinteren Bereich des Fahrzeugs.

8. Fahrzeug gemäß Anspruch 6 oder 7, wobei zumindest ein Vorderabschnitt (32) des Fahrt-Wind-Einlasskanals (17) angeordnet ist in so einer Weise, dass dieser einer Form einer Quer-Wandfläche (3a) eines Hauptrahmens (3) mit einem rechteckigen Querschnitt folgt.

9. Fahrzeug gemäß einem der Ansprüche 1 bis 8, wobei der Fahrt-Wind-Einlasskanal (17) zumindest einen Teil eines Verbindungselements (9), welches die Sekundär-Kammer (B) des Luftfilters (16) und den Einlass-Anschluss (6a) an einer Außenseite in einer Fahrzeug-Breiten-Richtung verbindet, abdeckt.

## Revendications

1. Véhicule, soit en particulier une motocyclette, comprenant :
un moteur thermique en V (6) possédant des conduits d'admission avant et arrière (6a, 6b),
un épurateur d'air (16) communiquant avec les conduits d'admission (6a, 6b) du moteur (6), ainsi qu'un conduit d'introduction d'air soufflé (17) destiné à introduire un flux d'air dans un compartiment primaire (A) de l'épurateur d'air (16), le conduit d'introduction d'air soufflé (17) s'étendant depuis un orifice d'introduction d'air extérieur (17a) situé en avant du conduit d'admission avant (6a) et jusqu'à un orifice de sortie d'air extérieur (17b) formé à l'extrémité arrière du conduit d'introduction d'air soufflé (17) communiquant avec le compartiment primaire (A) de l'épurateur d'air (16), l'épurateur d'air (16) inclut un boîtier d'épurateur d'air (18) et un élément (19) destiné à définir l'intérieur du boîtier de l'épurateur d'air (18) dans le compartiment primaire (A) et dans un compartiment secondaire (B), et tel que le conduit d'introduction d'air soufflé (17) est relié au compartiment primaire (A) situé en dessous de l'élément (19), et le compartiment secondaire (B) est placé de telle sorte que la majeure partie de lui-même est située en avant de l'élément (19), **caractérisé en ce que** le conduit d'introduction d'air soufflé (17) s'étend depuis l'orifice d'introduction d'air extérieur (17a) vers l'arrière et au delà des conduits d'admission avant et arrière (6a, 6b) jusqu'au compartiment primaire (A) de l'épurateur d'air (16) qui est situé à l'arrière des conduits d'admission avant et arrière (6a, 6b).

2. Véhicule selon la revendication 1, dans lequel l'élément (19) présente une forme plate et est disposé latéralement de façon globalement horizontale.

3. Véhicule selon la revendication 1 ou 2, dans lequel le boîtier d'épurateur d'air (18) comprend des boîtiers supérieur et inférieur (20, 21) accouplés ensemble, ledit boîtier inférieur (21) comportant un fond avant (21b) et un fond arrière (21c) en formant un renflement vers le bas en dessous du fond avant (21b), ledit fond arrière (21c) définissant le compartiment primaire (A) avec l'élément (19).

4. Véhicule selon l'une des revendications 1 à 3, dans lequel l'élément (19) est un élément de filtrage.

5. Véhicule selon l'une des revendications 1 à 4, dans lequel l'élément (19) comprend un papier filtre de type humide (26) placé et fixé dans une section de boîtier (19a) façonnée en une forme servant à recouvrir la surface divisée dans le fond arrière (21a) de l'enveloppe inférieure (21) du boîtier d'épurateur d'air (18).

6. Véhicule selon l'une des revendications 1 à 5, dans lequel le conduit d'introduction d'air soufflé (17) est placé de telle sorte que la majeure partie de l'orifice d'introduction d'air extérieur (17a) est située sur un côté externe de la fourche avant (5), dans la direction de la largeur du véhicule telle qu'on peut la voir depuis l'avant du véhicule.

7. Véhicule selon la revendication 6, dans lequel le conduit d'introduction d'air soufflé (17) est disposé obliquement de manière à reposer sur un côté interne dans la direction de la largeur du véhicule comme on peut le voir par-dessus le véhicule, vers l'arrière du véhicule.

8. Véhicule selon la revendication 6 ou 7, dans lequel au moins une partie avant (32) du conduit d'introduction d'air soufflé (17) est agencée de façon à suivre la forme d'une surface latérale de paroi (3a) du cadre principal (3) présentant une section transversale rectangulaire.

9. Véhicule selon l'une des revendications 1 à 8, dans lequel le conduit d'introduction d'air soufflé (17) recouvre au moins une partie d'un élément formant joint (9) reliant le compartiment secondaire (B) de l'épurateur d'air (16) et le conduit d'admission (6a) sur un côté externe dans la direction de la largeur du véhicule.
